Europäisches Patentamt

European Patent Office    (11) Publication number: **0 128 735**
                                                        A2
Office européen des brevets

(12)                    # EUROPEAN PATENT APPLICATION

(21) Application number: 84303790.4    (51) Int. Cl.³: **G 02 C 9/04**

(22) Date of filing: **05.06.84**

(30) Priority: **09.06.83 US 502482**

(43) Date of publication of application: **19.12.84 Bulletin 84/51**

(84) Designated Contracting States: **AT CH DE FR GB IT LI NL**

(71) Applicant: **POLAROID CORPORATION, 549 Technology Square, Cambridge, Massachusetts 02139 (US)**

(72) Inventor: **Lane, William P., 10 Edgewater Lane, Taunton Massachusetts (US)**
Inventor: **Maierbi, Robert A., 29 Intervale Road, Sudbury Massachusetts (US)**

(74) Representative: **Abbott, Leonard Charles et al, GILL JENNINGS & EVERY 53-64 Chancery Lane, London WC2A 1HN (GB)**

(54)  **Two-position auxiliary lens mounting device for spectacles.**

(57)  A two-position auxiliary lens mounting device for spectacles including a clip portion (26) releasably attachable to spectacles, an auxiliary lens mounting portion (30) and a hinge portion (28) connecting the mounting portion to the clip portion for movement between a covering position in which the auxiliary lenses overlie the spectacle lenses and a cleared position in which the auxiliarly lenses are out of the normal field of vision through the spectacle lenses. The device is in the form of a one-piece moulding of plastics material and the hinge portion includes an integral spring portion (72, 76, 78, 80) which is operative as an overcentring device and by which the mounting portion is both retained in and biased toward the respective covering and cleared positions.

*A*

## TWO-POSITION AUXILIARY LENS MOUNTING DEVICE FOR SPECTACLES

This invention relates to spectacle accessories and more particularly, it concerns improvements in hinged clip devices by which an auxiliary lens assembly represented by sunglasses, for example, may be clipped to the spectacles for movement between a covering position overlying the lenses of the spectacles and a cleared position in which the auxiliary lenses are retained in a position of noninterference with normal use of the spectacles.

Auxiliary lens attachments for spectacles are commonly embodied as sunglasses adapted to be releasably mounted or clipped to the frame or lenses of the spectacles. Although the mount for the auxiliary lenses may be a simple clip arrangement by which the auxiliary lenses are removably retained in a single covering position over the spectacle lenses, it is preferable that the mount incorporate a hinge feature by which the auxiliary lenses may be moved between and retained in either a covering position overlying the spectacle lenses or a cleared position, all without physically removing the auxiliary lens unit from the spectacles.

U.S.-A-3,575,497 discloses an auxiliary lens mounting device representative of the latter class of mounts in which the auxiliary lenses or sunglasses may be adjusted between covering and cleared positions. Functional components of such devices include a clip for retention of the device on the spectacle frame or lenses, an auxiliary lens mount, a hinge for interconnecting the lens mount with the clip and some form of yieldable retention means by which the auxiliary lenses are held releasably in either a covering position overlying the spectacle lenses or a cleared position in which the auxiliary lenses are retained in the cleared position. In the prior art, as exemplified by the aforementioned U.S. patent, these functional requirements are fulfilled by an assembly of discrete structural components in which relatively movable members are pivotally inter- -connected with a biasing spring to assure retention of the auxiliary lenses in either one of the two positions. While assemblies of this type are effective in the attainment of a two-position auxiliary lens mount, a significant portion of the manufacturing costs incident to the provision of such mounts is attributable to the assembly of individual components. Accordingly, there is a need for an auxiliary lens mount for spectacles by which the functional advantages of the two-position mount of the prior art is retained without the manufacturing costs incident to the assembly of individual components.

- 3 -

A spectacle mounting device according to the present invention comprises: a clip portion for removably securing the device to spectacles, a hinge portion, and a mounting portion adapted to receive auxiliary lenses and connected to the clip portion by the hinge portion for movement between a covering position in which auxiliary lenses attached to the mounting portion overlie spectacle lenses to which the mounting device is attached and a cleared position in which the auxiliary lenses attached to the mounting portion are out of the normal field of vision through the spectacle lenses; and is characterized in that the clip portion, the hinge portion and the mounting portion are formed by a one-piece moulding of plastics material and in that the hinge portion includes over-centring spring means for advancing the mounting portion to and retaining the mounting portion in either of the covering and cleared positions.

Such a one-piece two-position mounting device for attaching auxiliary lenses to spectacles can be manufactured at lower cost than the prior assemblies of discrete components.

The dimensional configurations of the various portions of the moulding are related to the characteristics of the moulded plastic in such a way to achieve the required flexure, resiliency and rigidity in the respective component portions of the integral device. Thus, the clip portion of the device preferably includes front and rear pairs of clasping clip legs depending from a block-like head section in a manner such that one of the two pairs is resilient in relation to the other. The one leg thus provides a clasping bias while the other leg pair establishes a reference bearing against one side of the spectacle frame and/or lenses over which the clip portion is received. The auxiliary lens mounting portion is interconnected with the head section of the clip portion by the hinge portion which preferably includes a spring component of the same plastic material to be operative as an overcentring spring device to urge the mounting portion in either the cleared position or the covering position in relation to the spectacle lenses.

In order that the invention may be better understood, an embodiment of the invention will now be described with reference to the accompanying drawings, in which:

Figure 1 is a perspective view illustrating an auxiliary lens mounting device embodying the invention in place on a pair of conventional spectacles and retaining auxiliary lenses in a cleared position;

Figure 2 is a side elevation of the auxiliary lens mounting device embodying the present invention;

Figure 3 is a front elevation of the mounting device;

Figure 4 is a rear elevation of the mounting device in a cleared position with a fragment of the auxiliary lens shown in phantom lines;

Figure 5 is a cross-section on line 5-5 of Figure 3;

Figure 6 is a cross-section similar to Figure 5 but illustrating the parts of the device in different relative positions;

Figure 7 is a plan view of the mounting device in the cleared position as illustrated in Figures 2 to 4;

- 5 -

Figure 8 is a side elevation corresponding to the cross-section of Figure 6;

Figure 9 is an enlarged fragmentary cross-section in the region of the sight circle 9 of Figure 5;

Figure 10 is an enlarged fragmentary side elevation of the region within the sight circle 10 in Figure 5; and

Figure 11 is an enlarged fragmentary cross-section within the region of the sight circle 11 in Figure 5.

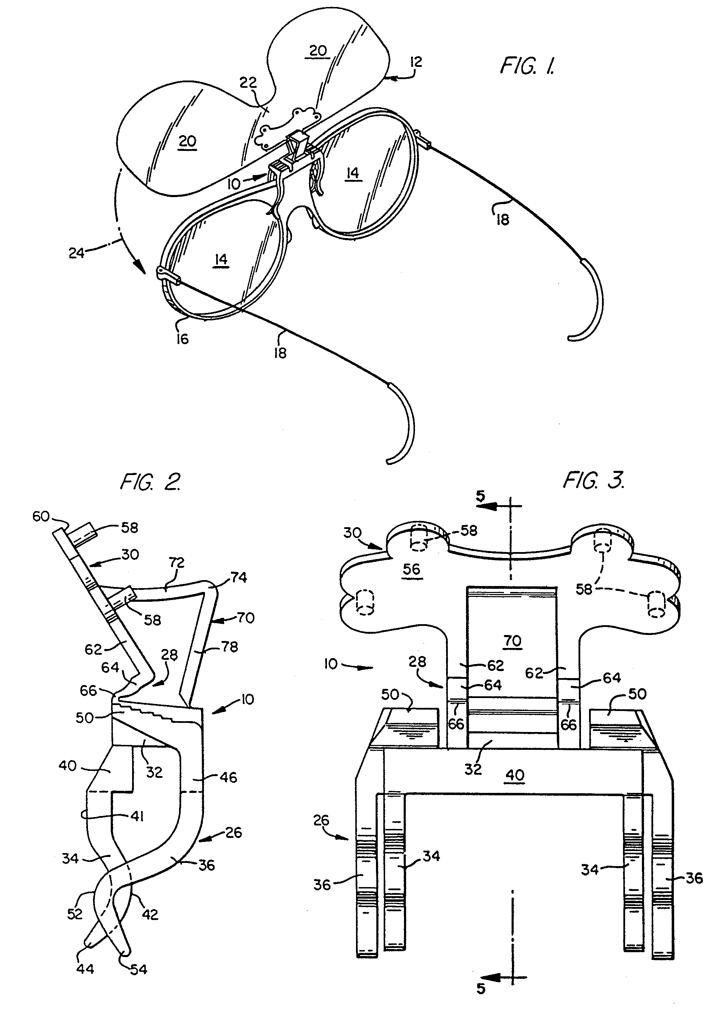

In Fig. 1 of the drawings, the mounting device is generally designated by the reference numeral 10 and shown as it is used to support an auxiliary lens unit 12 from the bridge area of a pair of spectacle lenses 14 typically mounted in a frame 16 to which ear pieces 18 are attached. In the illustrated embodiment, the auxiliary lens unit 12 is a single sheet of form-sustaining plastic material shaped to provide a pair of auxiliary lens portions 20 separated by a bridge portion 22. Also, the unit 12 is shown in a cleared position in which the field of view through the spectacle lenses 14 is unobstructed by the auxiliary unit 12. As will be apparent from the description to follow of the mounting device 10, the unit 12 is movable from the cleared position shown in Fig. 1, in the direction of the arrow 24, downwardly so that the auxiliary lenses 20 overlie the front of the spectacle lenses 14 in what will be referred to hereinafter as a "covering position." As is well known in the art, the sheet defining the lenses 20 may be shaded and polarizing to function as sunglasses and thus protect the user of the spectacles from bright light and glares. Whether shaded or clear, the auxiliary lens unit 12 may also serve as a protective barrier against objects or materials which may damage or impair vision through the spectacle lenses 14.

The mounting device 10 of the invention is a one-piece molding of suitable plastic material such as polypropylene. As such, the structure of the device 10 entails an integral organization of interconnected portions which serve as components having dimensional criteria related primarily to the plastic material in a way to be determinative of such relative physical characteristics as flexure, resiliency and rigidity. In the description of the device 10 to follow, therefore, the composite illustrations in Figs. 2-11 will deserve careful scrutiny in the interest of gaining a complete understanding of the structure and functional or operational features embodied in the mounting device 10.

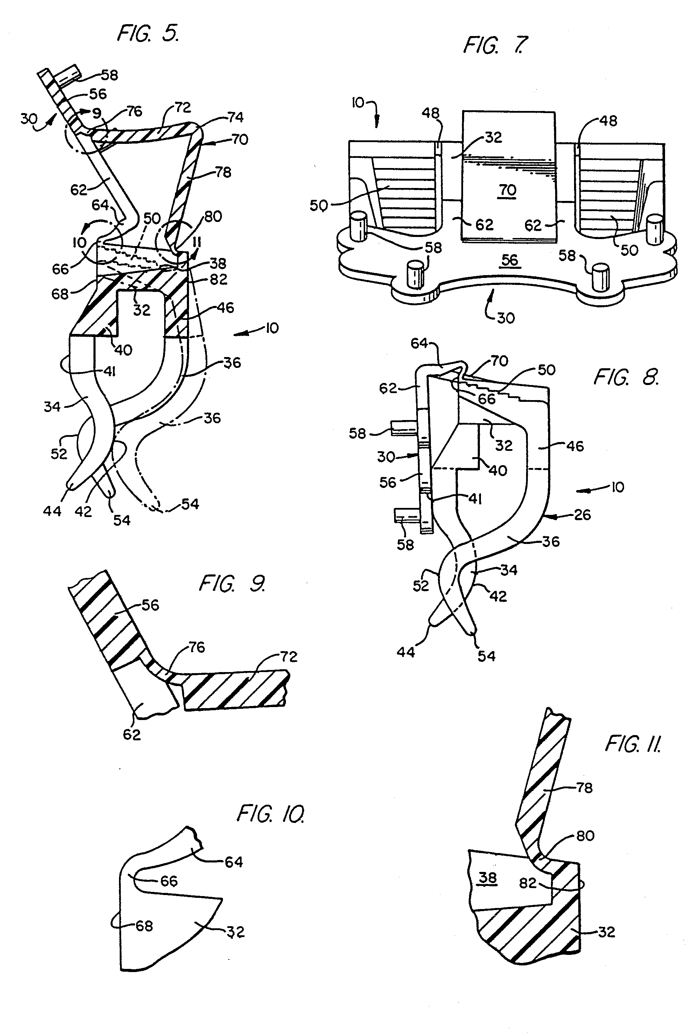

The mounting device 10 may be characterized as having three major portions which are apparent in Figs. 2-6 and 8 as a clip portion 26, a hinge portion 28 and an auxiliary lens mounting portion 30. The clip portion 26 is defined by a head section 32 from which clip legs depend as front and rear pairs 34 and 36, respectively. The head section 32 is in the nature of a block-like formation having an upwardly and forwardly oriented recess 38 (Fig. 5). In the plan view of Fig. 7, it will be observed that the head section 32 is located centrally across the width of the device 10, assuming about one-third of the transverse dimension or width of the device 10.

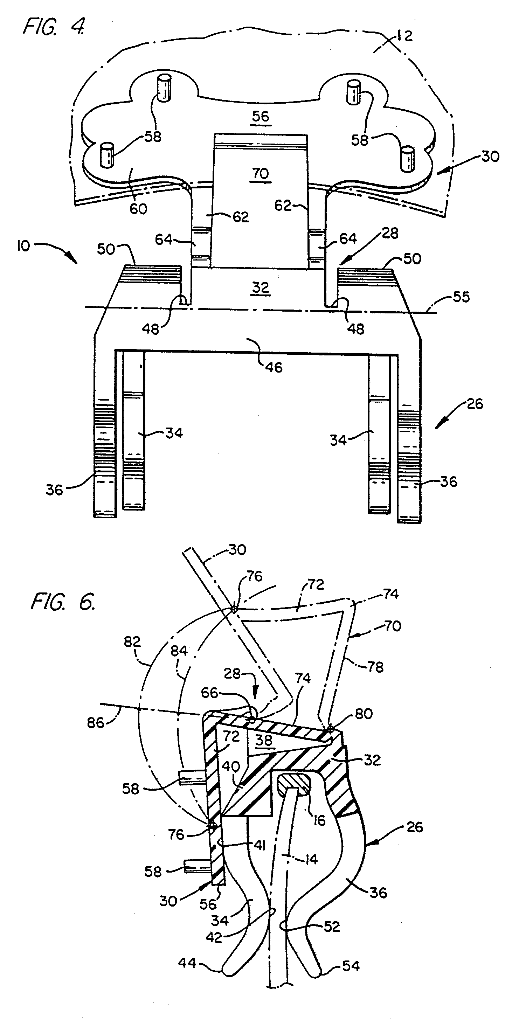

The front pair of clip legs 34 depend from the ends of a relatively heavy and thus rigid beam section 40 joining with the front of the head section 32. The front legs 34 are also relatively heavy and thus rigid and are shaped to define an upper forwardly facing, generally flat surface 41 and a convex spectacle lens engaging surface 42 as a result of an arcuate configuration terminating in a downwardly and forwardly projecting distal end 44. Also, in Figs. 3 and 4 of the drawings it will be noted that the lateral spacing between the front clip legs 34 is less than the lateral spacing of the rear clip legs 36.

The rear clip legs 36 are supported at their upper ends from a flange portion 46 which depends from the head section 32 as may be observed most clearly from Figs. 4 and 5. The connection of the flange 46 to the rear of the head section 32 is delimited in length by a pair of slots 48 which space opposite ends of the head section 32 from the inboard sides of a pair of forwardly projecting rear clip leg spreading tabs 50. The tabs 50 are serrated on their upper surfaces as may be observed in Figs. 4 and 5 and in their upward and forward projection from the flange 46 become spaced at their front ends from the top of the beam section 40 carrying the front clip legs 34. This latter relationship is shown most clearly in Figs. 2 and 3.

The configuration of the rear clip legs 36 in a normal or a relaxed condition of the device 10 is as shown in solid lines in Figs. 2, 5 and 8 of the drawings. The legs are reversely curved to provide a forwardly facing convex bearing surface 52 merging with a downwardly and rearwardly projecting distal end 54. The respective ends 44 and 54 of the front and rear legs 34 and 36 define approximately a right angle with each other as shown. This diverging relationship of the leg ends 44 and 54 facilitate mounting the device 10 on the spectacle lenses 14.

To engage the clip portion 26 over the spectacle lenses 14, the tabs 50 are depressed and because of the limited length connection of the flange 46 to the head section 32, the rear legs 36 flex generally about the axis 55 (Fig. 4) to the approximate position illustrated by phantom lines in Fig. 5 of the drawings. In this condition, the clip portion 26 may be depressed downwardly over the lenses 14 to assume the approximate final position illustrated in Fig. 6 of the drawings. Thus, it will be observed that the relatively rigid connection of the front clip legs 34 to the head section 32 causes the front legs 32 to be determinative of the positioning of the clip portion 26 on the spectacle lenses 14. The relatively flexible connection of the rear legs 36 allows the rear clip legs to be flexed to a relatively open condition for clasping engagement with the spectacle lenses 14 and yet exert a relatively strong spring or clasping force against the front and rear surfaces of the spectacle lenses 14 at the bearing surfaces 42 and 52 of the clip legs 34 and 36.

The auxiliary lens mounting portion 30, as shown in Fig. 4, includes a plate-like portion 56 of the device 10. Although the major peripheral configuration of the plate 56 is predicated in substantial measure on aesthetics, it functions to attach the auxiliary lens unit 12 with the device 10 with staking tenons 58 projecting from the outer surface 60 of the plate 56. Although the tenons 58 are illustrated as cylindrical posts in Figs. 2-4, for example, these tenons extend through apertures in the auxiliary lens unit 12 and are thereafter fused over the outer surface of the auxiliary lens unit 12 as an enlarged head in the manner of a rivet.

The hinge portion 28 serves to interconnect the lens mounting portion 30 and the clip portion 26. More specifically, the structure of the hinge unit, as shown most clearly in Figs. 2-4 of the drawings, includes a pair of L-shaped extensions 62 of the plate-like portion 56. A relatively long leg of each extension 62 lies in the plane of the plate portion 56, whereas a relatively short leg portion 64 of each extension 62 terminates in a flexure hinge 66. As shown most clearly in Figs. 2, 5 and 10, the flexure hinge 66 joins with the head section 32 near the front surface 68 thereof.

Positioned between the extensions 62 is a V-shaped spring section 70 having one leg 72 extending from a common juncture 74 to a flexure hinge 76. The other leg 78 of the spring 70 extends from the juncture 74 to another flexure hinge 80 joining with the head section 32 of the clip portion 26 near the rear surface 82 thereof. In an essentially relaxed position of the spring 70, the legs 72 and 78 thereof establish an acute angle of approximately 60 degrees.

The spring 70 is selected to be of a thickness of the plastic material from which the device 10 is molded which when coupled with its width (Figs. 3, 4 and 7) will exhibit a spring-like characteristic as a result of resiliency in the legs 72 and 78 and particularly at the juncture 74 of the two legs. The effect of the spring 70 in the device 10 may be appreciated from the illustration in Fig. 6 of the drawings where the respective flexure hinges 66, 76 and 80 are represented in point form. Thus in Fig. 6, the point of the hinge 76, as a result of pivotal movement of the mounting plate 56 about the hinge pivot 66, follows an arcuate path represented by the dashed arc 82 from the cleared position represented in phantom lines to a covering position represented in solid lines. Pivotal movement of the hinge 76 as would occur normally about the rear flexure hinge 80, connecting the arm 78 of the spring to the head section 32, normally follows the arcuate path 84 in Fig. 6. As a result of flexure in the spring 70 and pivotal movement of the mounting plate portion 56 about the hinge pivot 66, however, the point 76 is carried through the arc 82, causing the spring 70 to flex or exhibit a tension force between the hinge points 76 and 80. The point 76 passes over a top-dead-center position represented by the axis or line 86 approximately midway between the cleared and covering positions. As a result, after passing over top-dead-center, the spring snaps the mounting plate and the auxiliary lens unit 12 to either one of the cleared or covering positions.

It will be noted that, in the covering position, the arm 78 of the spring 70 lies within the recess 38 in the head section 32. Also in the covering position, the mounting plate portion 56 is biased against the front upper surface 41 of the front clip legs in a way to positively position the auxiliary lens unit 12 in relation to the spectacle lenses 14. In the context of the device 10 per se, therefore, the covering position may be characterized as that position in which the mounting portion 30 is folded against the clip portion 26. Similarly, the cleared position may be considered as that position in which the mounting portion 30 extends clear of or away from the clip portion 26.

In light of the one-piece structure of the mounting device 10, the manufacture thereof facilitates use of injection molding techniques and a substantial reduction in cost in relation to prior art devices requiring assembly of discrete components. Yet, the device is a fully operational, two-position auxiliary lens mount exhibiting features including ease of attachment to and removal from a pair of spectacles, firmness of mounting to the spectacles with positional accuracy, positive retention of the auxiliary lenses in either covering or cleared positions, and spring assisted movement of the auxiliary lenses to both of the two positions.

Thus, it will be appreciated that as a result of the present invention, a highly effective two-position, auxiliary lens mount is provided by which the principal objective, among others, is completely fulfilled. It is contemplated and will be apparent to those skilled in the art that changes and/or modifications in the embodiment illustrated and described herein may be made without departure from the present invention.

0128735

- 12 -
<u>CLAIMS</u>

1.      A spectacle mounting device for auxiliary lenses, comprising:

a clip portion for removably securing the device to spectacles, a hinge portion, and a mounting portion adapted to receive auxiliary lenses and connected to the clip portion by the hinge portion for movement between a covering position in which auxiliary lenses attached to the mounting portion overlie spectacle lenses to which the mounting device is attached and a cleared position in which the auxiliary lenses attached  to the mounting portion are out of the normal field of vision through the spectacle lenses;

characterized in that the clip portion (26), the hinge portion (28) and the mounting portion (30) are formed by a one-piece moulding of plastics material and in that the hinge portion includes over-centring spring means for advancing the mounting portion to and retaining the mounting portion in either of the covering and cleared positions.

2.      A device in accordance with claim 1, wherein the clip portion comprises a head section (32) and front (34) and rear (36) pairs of clip legs depending from the head section and adapted to clasp the front and rear surfaces, respectively, of the pair of spectacle lenses.

3.      A device in accordance with claim 2, in which the front clip legs  are relatively rigid with respect to the head section by comparison with the rear clip legs, whereby the orientation of the head section is determined by the orientation of the front clip legs.

4.      A device in accordance with claim 2 or 3, wherein the front and rear clip legs (34, 36) have respective rearwardly and forwardly facing spectacle lens bearing surfaces, the bearing surfaces of the rear legs lying forwardly of the bearing surfaces of the front legs in a relaxed state of the plastics material, and including measn (50) to flex the rear clip legs in a rearward direction with respect to the front clip legs.

5.      A device in accordance with claim 4, wherein the means to flex the rear legs comprises a pair of tabs (50) projecting upwardly and forwardly in relation to the head section.

6.      A device in accordance with claim 2, 3, 4 or 5, in which the hinge portion (28) comprises an extension (62) of the mounting portion (30), means (66) pivotally connecting the  projecting end (64) of the extension (62) to the front of the head section (32).

7.      A device in accordance with any one of claims 2 to 6, wherein the hinge means (28) connects the mounting portion (30) to the head section (32) for pivotal movement about a hinge axis (66) located forwardly of the head section, and wherein the spring means comprises a V-shaped spring portion (72,78) having one leg (72) pivotally connected to the mounting portion (30) and another leg (78) pivotally connected to the head section (32) at a spring pivot axis (80) spaced rearwardly from the said hinge axis (66) whereby the leg ends of the V-shaped spring are spread during passage through an over-centre position with respect to the said hinge  axis as the  mounting plate is moved between the covering and cleared positions.

*FIG. I.*

*FIG. 2.*

*FIG. 3.*

FIG. 4.

FIG. 6.

FIG. 5.

FIG. 7.

FIG. 8.

FIG. 9.

FIG. 10.

FIG. 11.